# EUROPÄISCHE PATENTSCHRIFT

(11) **EP 1 071 890 B1**
(45) Veröffentlichungstag und Bekanntmachung des Hinweises auf die Patenterteilung: **14.11.2001**
(21) Anmeldenummer: 99910325.2
(22) Anmeldetag: 27.02.1999
(51) Int. Cl.: F16H 15/38, F16H 55/34

(54) **WÄLZGETRIEBE, INSBESONDERE TOROIDGETRIEBE**
ROLLER GEAR, ESPECIALLY A TOROIDAL GEAR
ENGRENAGE A ROULEMENTS, EN PARTICULIER ENGRENAGE TOROIDAL

(30) Priorität: 22.04.1998 DE 19817955
(43) Veröffentlichungstag der Anmeldung: 31.01.2001
(73) Patentinhaber: INA Wälzlager Schaeffler oHG, 91074 Herzogenaurach (DE)
(72) Erfinder: DÖPPLING, Wolfgang, D-91086 Aurachtal (DE); WINKLER, Manfred, D-91086 Aurachtal (DE)
(86) Internationale Anmeldenummer: EP9901390
(87) Internationale Veröffentlichungsnummer: WO9954645

(56) Entgegenhaltungen:
- EP-A- 0 283 855
- DE-C- 831 627
- FR-A- 1 060 647
- GB-A- 775 775
- US-A- 1 517 722
- US-A- 4 275 610

## Beschreibung

### Gebiet der Erfindung

Die vorliegende Erfindung betrifft Wälzgetriebe, insbesondere Toroidgetriebe, mit stufenlos veränderbarer Übersetzung. Derartige Getriebe können in Kraftfahrzeugen eingesetzt werden und dort die herkömmlichen Schaltgetriebe oder Automatikgetriebe mit Drehmomentwandler ersetzen.

### Hintergrund der Erfindung

Aus der EP 0528383-B beispielsweise ist ein Toroidgetriebe mit stufenlos veränderbarer Übersetzung bekanntgeworden. Eine Antriebsscheibe und eine Abtriebsscheibe sind koaxial zueinander angeordnet. Zwischen den beiden Scheiben ist ein Reibrad angeordnet, dessen umfangsseitig vorgesehene Reibfläche mit einander zugewandten Stirnflächen der beiden Scheiben zusammenarbeitet. Die Leistung wird von der Antriebsscheibe auf das Reibrad und von dem Reibrad auf die Abtriebsscheibe über ein Traktionsfluid übertragen. Das Traktionsfluid wirkt zwischen der Reibfläche des Reibrades und den Stirnflächen der Scheiben. Das Reibrad ist an einem schwenkbar angeordneten Träger drehbar gelagert. Das Reibrad, die Antriebsscheibe und die Abtriebsscheibe sind massive Bauteile. Diese Bauteile müssen eine außerordentlich hohe Steifigkeit aufweisen, da das Reibrad unter einem Druck von ca. 12 Tonnen zwischen den beiden Scheiben eingespannt ist. Diese Druckbelastung ist notwendig, um die reibschlüssig übertragenen Umfangskräfte einwandfrei von dem Antrieb auf den Abtrieb zu übertragen. Derartige Wälzgetriebe weisen ein relativ großes Eigengewicht auf. im Automobilbau werden im Gegensatz dazu leichte Bauweisen gefordert.

Bei dem aus EP 0 283 855-A1 bekannten Toroidgetriebe ist das Reibrad gegenüber dem oben beschriebenen Reibrad vom Gewicht her leichter, weil dünnwandiger ausgeführt. Allerdings besteht bei dünnwandig ausgeführten Reibscheiben die Gefahr des Einknickens unter hohen Lasten. Die Reibscheibe weist umfangsseitig einen umlaufenden Bord auf, der in Kontakt mit der Antriebs- und mit der Abtriebsscheibe steht. Dieser Bord ist an seinen axialen Enden nicht abgestützt, und kann daher einer Radiallast ausweichen.

Aus US 11 75 667-A ist ein Toroidgetriebe bekannt, dessen Reibscheibe einen Hohlraum aufweist, der das Gewicht der Reibscheibe reduziert; der Hohlraum dient der Aufnahme von Schmiermittel, das durch Ölkanäle austreten kann, um das Lager der Reibscheibe und ihrer Welle zu schmieren. Zusätzlich ist eine Art Reifen auf die Reibscheibe aufgezogen, der mit der Antriebswelle und der Abtriebswelle zusammenarbeitet. Der Reifen stellt ein zusätzliches Bauteil dar, das in einem zusätzlichen Arbeitsgang aufgezogen werden muß.

### Aufgabe der Erfindung

Aufgabe der vorliegenden Erfindung ist es daher, ein Wälzgetriebe nach den Merkmalen des Oberbegriffs des Anspruchs 1 anzugeben, dessen Eigengewicht unter Einhaltung der geforderten Steifigkeiten reduziert ist, wobei die Anzahl von Einzeiteilen reduziert ist.

### Zusammenfassung der Erfindung

Erfindungsgemäß wird diese Aufgabe durch die Merkmale des Anspruchs 1 gelöst. Der oder die Hohlräume reduzieren das Gewicht des erfindungsgemäßen Toroidgetriebes erheblich. Der oder die Hohlräume sind über den Umfang des Reibrades derart verteilt angeordnet, daß das Reibrad einwandfrei ohne Unwucht rotiert. Der oder die Hohlräume können von den beiden Blechteilen vollständig umschlossen sein, beispielsweise um das Eindringen von Traktionsfluid in die Hohlräume auszuschließen. Die Hohlräume können aber auch zu der Umgebung des Reibrades hin geöffnet sein. Die Reibfläche läßt sich beispielsweise an einem umlaufenden Kragen eines der beiden Blechteile vorsehen; es ist kein separater Reifen erforderlich. Dadurch, daß die Verbindung der beiden Blechteile miteinander außerhalb der Reibfläche erfolgt, ist sichergestellt, daß keine unerwünschten Stoßkanten im Bereich der Reibfläche entstehen. Die beiden Blechteile sind vorzugsweise derart aufeinander abgestimmt, daß der Kragen an seinen beiden axialen Enden hinreichend abgestützt ist, aber nicht frei auskragt, wie es beispielsweise bei der Reibscheibe gemäß EP 0 283 855 der Fall ist.

Die äußere Gestalt des Reibrades bezogen auf massiv geformte Reibräder kann im wesentlichen beibehalten werden. Die axiale Erstreckung der Reibräder und die Wanddicke der Blechteile sind so groß gewählt, daß einerseits eine hinreichend große Aufstandfläche des Reibrades gewährleistet ist und daß andererseits eine ausreichende Steifigkeit des Reibrades unter dem Radialdruck von ca. 12 Tonnen gewährleistet ist. Das Reibrad kann ggfs. axial weiter auseinander gezogen werden, um diese Bedingungen zu erfüllen, wobei das Volumen des von den Blechteilen begrenzten Hohlraumes zunimmt.

Eine weitere vorteilhafte Wirkung des erfindungsgemäßen Wälzgetriebes besteht darin, daß die Stellkräfte zur Verstellung der Reibräder reduziert sind, wie nachfolgend erläutert wird. Zur Veränderung des Übersetzungsverhältnisses zwischen Antrieb und Abtrieb - beispielsweise um die Abtriebsdrehzahl zu vergrößern - wird der Träger des Reibrades derart verschwenkt, daß die Reibfläche einerseits radial weiter außen an der Antriebsscheibe und andererseits radial weiter innen an der Abtriebsscheibe anliegt. Das bedeutet, daß während dieser Verstellung die Rotationsachse des rotierenden Reibrades gekippt wird. Dieses Kippen der Rotationsachse hat jedoch unerwünschte Kreiselkräfte zur Folge, die die Verstellbewegung erschweren können. Diese Kreiselkräfte sind einerseits abhängig von der Masse und andererseits von der Drehzahl des Reibrades. Wegen der reduzierten Masse der aus Blech gebildeten Reibräder ergeben sich somit erheblich reduzierte Kreiselkräfte, so daß die Verstellung der Reibräder einfacher erfolgen kann.

Ein weiterer Vorteil besteht darin, daß die Herstellungskosten für die aus Blech gebildeten Reibräder deutlich niedriger sind als die Herstellungskosten für massive Reibräder, die jedenfalls spangebend bearbeitet werden müssen.

Oftmals ist die Mantelfläche der Reibräder konvex gewölbt. Dementsprechend sind die einander zugewandten Stirnseiten der Antriebs- und der Abtriebsscheibe konkav gewölbt, so daß eine einwandfreie Anlage der Reibfläche an den Stirnseiten der beiden Scheiben unabhängig von der Lage des Trägers gewährleistet ist. Um die Mantelfläche der bekannten massiven Reibräder konvex zu gestalten, müssen diese geschliffen werden. Das Schleifen der konvexen Reibfläche wiederum bedarf besonderer Sorgfalt. Wenn beispielsweise von beiden Stirnseiten her die Mantelfläche geschliffen wird, besteht die Gefahr, daß etwa in der axialen Mitte des Reibrades eine umlaufende Kante entsteht, die unter Umständen mit bloßem Auge nur schwer erkennbar ist. Derartige Kanten können jedoch zur Folge haben, daß das Reibrad im Betrieb nicht mehr einwandfrei arbeiten kann, da das Traktionsfluid nicht länger die Kräfte einwandfrei übertragen kann; im Bereich der umlaufenden Kante können daher unzulässig hohe Pressungen einsetzen, die den Totalausfall des Reibrades zur Folge haben können. Mit dem erfindungsgemäß vorgeschlagenen Toroidgetriebe ist es hingegen möglich, daß die konvexe Reibfläche beispielsweise an einem der scheibenförmigen Blechteile in einem Spanlosverfahren angeformt werden kann, ohne daß eine derartige Kante entstehen könnte.

Insbesondere unter der Berücksichtigung der großen Andruckkräfte bedarf die Verbindung der beiden Blechteile miteinander besonderer Erwägungen. Einerseits soll die Funktion der Reibfläche durch die Verbindung der beiden Blechteile miteinander nicht beeinträchtigt werden, andererseits ist darauf zu achten, daß der Kraftfluß in dem Reibrad die Verbindung nicht in unzulässiger Weise beansprucht. Eine erfindungsgemäße Weiterbildung sieht vor, daß die beiden Blechteile miteinander verschweißt sind, wobei die Schweißnaht außerhalb der Reibfläche angeordnet ist. Eine Schweißverbindung oder eine andere Verbindung läßt sich in besonders günstiger Weise realisieren, wenn das eine scheibenförmige Blechteil an seinem äußeren Umfang mit einem einstückig angeformten, umlaufenden äußeren Kragen versehen ist, dessen äußere Mantelfläche die Reibfläche aufweist, wobei das andere scheibenförmige Blechteil innerhalb des äußeren Kragens angeordnet und mit dem äußeren Kragen an dessen innerer Mantelfläche - vorzugsweise über eine Schweißverbindung - fest verbunden ist. Die beiden scheibenförmigen Blechteile können stirnseitig im wesentlichen eben ausgeführt sein, so daß zwischen ihnen ein durch die axiale Erstreckung des Kragens festgelegter Hohlraum definiert wird. Das andere Blechteil wird zweckmäßigerweise so angeordnet, daß es am äußeren Rand des freien Endes des Kragens anliegt. Auf diese Weise ist ausgeschlossen, daß das freie Ende des Kragens infolge der hohen Druckbelastung ausgelenkt werden kann. Da die beiden Blechteile im wesentlichen eben ausgeführt sein können, ist das erfindungsgemäße Reibrad nicht oder lediglich in geringem Ausmaß einer Biege- oder Schubbeanspruchung ausgesetzt.

Die äußere Mantelfläche des Kragens ist zur Bildung der Reibfläche konvex gewölbt. Wie bereits weiter oben erwähnt wurde, kann die konvexe Wölbung an dem Kragen des einen Blechteils dadurch erzeugt werden, daß dieser in einem Rolliervorgang verformt wird, wodurch die äußere Umfangsfläche des Kragens die gewünschte konvexe Wölbung erhält. Es sind jedoch auch andere Umformverfahren denkbar, beispielsweise das Tiefziehverfahren. Sollte es notwendig sein, ist es selbstverständlich möglich, daß die äußere Mantelfläche des Kragens nachträglich in einem Schleifverfahren zur Herstellung der konvexen Wölbung oder zur Optimierung der bereits ausgebildeten konvexen Mantelfläche bearbeitet wird.

Eine weitere besonders zweckmäßig erfindungsgemäße Weiterbildung sieht vor, daß das Reibrad mit einem koaxial angeordneten inneren Kragen versehen ist. Dieser Kragen kann zu beiden Stirnseiten des Reibrades vorgesehen sein und axial hervorstehen. Der Kragen kann aber auch axial innerhalb des Reibrades angeordnet sein.

An dem weiter oben bereits erwähnten Ausführungsbeispiel mit zwei scheibenförmigen Blechteilen soll die Funktion des Kragens näher erläutert werden. Die freien Enden der beiden inneren Kragen können einander zugewandt sein, wobei beide Kragen gemeinsam eine Nabenöffnung zur Aufnahme eines Bolzens begrenzen, der drehfest mit den beiden Blechteilen verbunden ist. Dieser Bolzen wiederum kann dann beispielsweise mittels eines Wälzlagers an dem schwenkbar angeordneten Träger gelagert sein. In diesem Fall sind die inneren Kragen vorzugsweise innerhalb der axialen Erstreckung der im wesentlichen eben ausgeführten Blechteile angeordnet.

Die freien Enden der beiden inneren Kragen können jedoch auch voneinander abgewandt sein, wobei zwischen den beiden inneren Kragen und dem Träger je ein Radiallager angeordnet ist. Bei dieser erfindungsgemäßen Weiterbildung entfällt ein separater Bolzen. Das Reibrad kann unmittelbar unter Zwischenschaltung der Radiallager an dem Träger gelagert werden. Auf diese Weise ist eine weitere Reduzierung Masse der erfindungsgemäßen Wälzgetriebe erreicht.

Bei der zuletztgenannten erfindungsgemäßen Weiterbildung kann an der äußeren Mantelfläche des inneren Kragens eine Laufbahn für Wälzkörper ausgebildet sein, die beispielsweise als Kugelrille in die äußere Mantelfläche eingeformt ist. Auf einen separaten Laufring beispielsweise für ein Radialrillenkugellager kann daher verzichtet werden.

Es kann erforderlich oder zweckmäßig sein, daß wenigstens eines der beiden Blechteile mit mehreren über den Umfang verteilt angeordneten, in Richtung auf das andere Blechteil vorspringenden Sicken versehen ist. Dadurch wird eine erhebliche Vergrößerung der Steifigkeit der erfindungsgemäßen Reibscheibe erreicht. Die Sicken können beispeisweise so weit vorspringen, daß sie zur Anlage an das gegenüberliegende Blechteil kommen. Die Sicken können im Bereich der Anlage mit dem anderen Blechteil beispielsweise mittels Punktschweißen fest verbunden werden. Auf diese Weise wird die Steifigkeit des Reibrades weiter erhöht. Die Abstützung des gegenüberliegenden Blechteils an den Sicken gewährleistet, daß das Blechteil nicht unter der großen Radiallast einknickt. Selbstverständlich können beide Blechteile mit derartigen Sicken versehen sein.

Nachstehend wird die Erfindung anhand von zwei in insgesamt vier Figuren dargestellten erfindungsgemäßen Ausführungsbeispielen näher erläutert. Es zeigen:
- Figur 1: ein erfindungsgemäßes Reibrad im Längshalbschnitt;
- Figur 2: eine schematische Darstellung eines an sich bekannten Toroidgetriebes im Längsschnitt;
- Figur 3: ein weiteres erfindungsgemäßes Reibrad im Längshalbschnitt und
- Figur 4: eine Draufsicht auf das erfindungsgemäße Reibrad aus Figur 3.

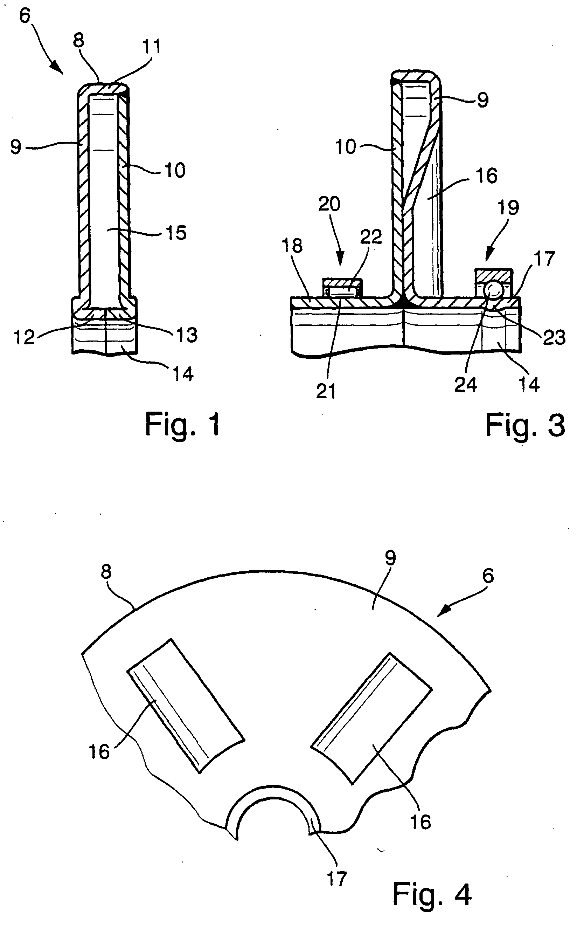

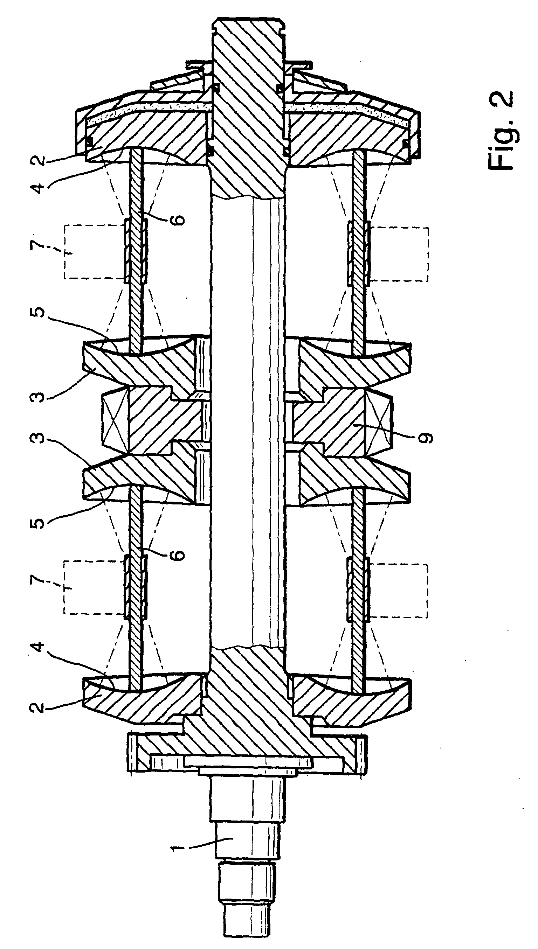

Figur 1 zeigt ein erfindungsgemäßes Reibrad im Längsschnitt, das in einem Toroidgetriebe verwendet wird, wie es in Figur 2 als bekannte Ausführung dargestellt ist. Figur 2 zeigt ein an sich bekanntes Toroidgetriebe in schematischer Darstellung. Auf einer Antriebswelle 1 sind Antriebsscheiben 2 und Abtriebsscheiben 3 angeordnet. Die Antriebsscheiben 2 sind drehfest mit der Antriebswelle 1 verbunden. Die Abtriebsscheiben 3 sind zwischen den beiden Antriebsscheiben 2 angeordnet und gegenüber der Antriebswelle 1 drehbar gelagert. Einander zugewandte Stirnseiten der einander benachbarten Antriebsscheiben 2 und Abtriebsscheiben 3 sind mit konkav gewölbten Anlageflächen 4, 5 für Reibräder 6 versehen. Die Reibräder 6 sind an schwenkbar angeordneten Trägern 7 drehbar gelagert. Umfangsseitig sind die Reibräder 6 mit konvexen Reibflächen 8 versehen, die gegen die Anlageflächen 4, 5 angedrückt sind. Die Abtriebsscheiben 3 sind drehfest mit einem Zahnkranz 9 verbunden, an den weitere, nicht dargestellte Getriebeglieder gekoppelt sind.

Das Reibrad 6 ist aus zwei Blechteilen 9, 10 gebildet, die beide im wesentlichen eben ausgebildet sind. Das eine Blechteil 9 ist an seinem äußeren Umfang mit einem einstückig angeformten, umlaufenden äußeren Kragen 11 versehen, der sich axial in Richtung auf das andere Blechteil 10 erstreckt. Radial innerhalb des Kragens 11 ist das andere Blechteil 10 angeordnet und umfangsseitig mit dem Kragen 11 mittels Laserschweißens fest verbunden. Die Stoßstelle zwischen dem Kragen und dem anderen Blechteil 10 liegt am freien Ende des Kragens 11. Auf diese Weise ist sichergestellt, daß der Kragen 11 infolge einer radialen Belastung nicht in unzulässiger Weise ausgelenkt wird.

Die beiden Blechteile 9, 10 sind an ihrem inneren Umfang jeweils mit einem einstückig angeformten, umlaufenden inneren Kragen 12, 13 versehen, wobei die beiden freien Enden dieser Kragen 12, 13 einander zugewandt sind und eine Nabenöffnung 14 zur Aufnahme eines nicht dargestellten Trägers begrenzen. Zwischen den beiden Blechteilen 9, 10 sind Hohlräume 15 gebildet.

Figur 3 zeigt ein weiteres erfindungsgemäßes Reibrad, das sich von dem aus der Figur 2 im wesentlichen dadurch unterscheidet, daß die beiden Blechteile 9, 10 an ihrem inneren Umfang jeweils mit einem einstückig angeformten, umlaufenden inneren Kragen 17, 18 versehen sind, deren freie Enden voneinander abgewandt sind. Das eine Blechteil 9 weist - ebenso wie das Blechteil 9 aus Figur 2 - mehrere über den Umfang gleichmäßig verteilt angeordnete Sicken 16 auf, die in Richtung auf das andere Blechteil 10 vorspringen und zur Anlage an das andere Blechteil 10 kommen. Jede Sicke 16 ist mit dem Blechteil 10 mittels Punktschweißen fest verbunden. Der oben erwähnte (nicht dargestellte) Bolzen kann hier gänzlich entfallen, da zwischen dem Kragen 17, 18 und dem Träger 7 direkt ein Radiallager 18, 19 zur Lagerung des Reibrades 6 gegenüber dem Träger 7 vorgesehen sein kann. Auf dem inneren Kragen 17 ist ein Radialrillenkugellager 19 angeordnet, und auf dem inneren Kragen 18 ist ein Radialnadellager 20 angeordnet. Die äußere Umfangsfläche des inneren Kragens 18 ist zugleich als Laufbahn 21 für Nadeln 22 des Radialnadellagers ausgebildet. Der Kragen 17 ist an seiner äußeren Mantelfläche mit einer spanlos eingeformten Kugelrille 23 versehen, an der Kugeln 24 des Radialrillenkugellagers 19 abwälzen.

Figur 4 zeigt das erfindungsgemäße Reibrad aus Figur 3 in der Draufsicht, wobei die über den Umfang verteilten Sicken 16 deutlich zu erkennen sind.

### Bezugszahlenliste

- 1: Antriebswelle
- 2: Antriebsscheibe
- 3: Abtreibsscheibe
- 4: Anlagefläche
- 5: Anlagefläche
- 6: Reibrad
- 7: Träger
- 8: Reibfläche
- 9: Blechteil
- 10: Blechteil
- 11: Kragen
- 12: innerer Kragen
- 13: innerer Kragen
- 14: Nabenöffnung
- 15: Hohlraum
- 16: Sicke
- 17: innerer Kragen
- 18: innerer Kragen
- 19: Radialrillenkugellager
- 20: Radialnadellager
- 21: Laufbahn
- 22: Nadel
- 23: Kugelrille
- 24: Kugel

## Patentansprüche

1. Wälzgetriebe, insbesondere Toroidgetriebe, mit stufenlos veränderbarer Übersetzung, mit wenigstens einem an einem schwenkbar angeordneten Träger (7) drehbar gelagerten, zwischen einer Antriebsscheibe (2) und einer Abtriebsscheibe (3) angeordneten Reibrad (6), dessen umfangsseitig vorgesehene Reibfläche (8) mit einander zugewandten Stirnflächen (4, 5) der beiden Scheiben (2, 3) zusammenarbeitet und das einen vorzugsweise als Lager- bzw. Bolzenaufnahme vorgesehenen zentralen Bereich aufweist, **dadurch gekennzeichnet, daß** das Reibrad (6) aus zwei außerhalb der Reibfläche (8) miteinander verbundenen Blechteilen (9, 10) gebildet ist, deren Trennebene im wesentlichen quer zur Rotationsachse des Reibrades (6) angeordnet ist, wobei zwischen den beiden Blechteilen (9, 10) im Bereich zwischen Reibfläche und zentralen Bereich wenigstens ein Hohlraum (15) angeordnet ist.

2. Wälzgetriebe nach Anspruch 1, bei dem die beiden Blechteile (9, 10) miteinander verschweißt sind, wobei die Schweißnaht außerhalb der Reibfläche (8) angeordnet ist.

3. Wälzgetriebe nach Anspruch 1, bei dem das eine scheibenförmige Blechteil (9) an seinem äußeren Umfang mit einem einstückig angeformten, umlaufenden äußeren Kragen (11) versehen ist, dessen äußere Mantelfläche die Reibfläche (8) aufweist, wobei das andere scheibenförmige Blechteil (10) innerhalb des äußeren Kragens (11) angeordnet und mit dem äußeren Kragen (11) fest verbunden ist.

4. Wälzgetriebe nach Anspruch 3, bei dem die äußere Mantelfläche des Kragens (11) konvex gewölbt ist.

5. Wälzgetriebe nach Anspruch 1, bei dem das Reibrad (6) mit einem koaxial angeordneten, inneren Kragen versehen ist.

6. Wälzgetriebe nach Anspruch 5, bei dem beide Blechteile (10, 11) an ihrem inneren Umfang jeweils mit einem einstückig angeformten, umlaufenden inneren Kragen (12, 13) versehen sind.

7. Wälzgetriebe nach Anspruch 6, bei dem die freien Enden der beiden inneren Kragen (12, 13) einander zugewandt sind, wobei beide Kragen (12, 13) gemeinsam eine Nabenöffnung (14) zur Aufnahme eines Bolzens begrenzen.

8. Wälzgetriebe nach Anspruch 6, bei dem die freien Enden der beiden inneren Kragen (17, 18) voneinander abgewandt sind, wobei zwischen den beiden inneren Kragen (17, 18) und dem Träger (7) je ein Radiallager (19, 20) angeordnet ist.

9. Wälzgetriebe nach Anspruch 8, bei dem an der äußeren Mantelfläche des inneren Kragens (18) eine Laufbahn (21, 23) für Wälzkörper (22, 23) ausgebildet ist.

10. Wälzgetriebe nach Anspruch 9, bei dem in die äußere Mantelfläche eine Kugelrille (23) eingeformt ist.

11. Wälzgetriebe nach Anspruch 1, bei dem der Blechmantel (9, 10) mit über seinen Umfang verteilt angeordneten Sicken (16) zur Versteifung des Reibrades (6) versehen ist.

12. Wälzgetriebe nach Anspruch 11, bei dem wenigstens eines der beiden Blechteile (9) mit mehreren über den Umfang verteilt angeordneten, in Richtung auf das andere Blechteil (10) vorspringenden Sicken (16) versehen ist.

13. Wälzgetriebe nach Anspruch 11, bei dem die Sicken (16) an dem anderen Blechteil (10) anliegen.

## Claims

1. Rolling gear transmission, especially toroidal transmission, with stepless adjustable gearing, with at least one friction wheel (6), mounted so as to be rotatable on a swivellable carrier (7) between a drive disc (2) and a takeoff disc (3), the friction surface (8) provided on the circumferential side of which works in conjunction with opposing face sides (4, 5) of the two discs (2, 3) and which has a central area preferably provided to receive a bearing or a bolt, **characterised in that** the friction wheel (6) is formed from two sheet metal parts (9, 10) joined together outside of the friction surface (8), the plane of separation of which is disposed substantially transverse to the axis of rotation of the friction wheel (6), wherein at least one cavity (15) is disposed between the two sheet metal parts (9, 10) in the area between the friction surface and the central area.

2. Rolling gear transmission according to claim 1, wherein the two sheet metal parts (9, 10) are welded together, wherein the weld seam is disposed outside of the friction surface (8).

3. Rolling gear transmission according to claim 1, wherein the one disc-shaped sheet metal part (9) is provided with a circulating outer collar (11) formed as one piece on its outer circumference, the outer shell surface of which has the friction surface (8) wherein the other disc-shaped sheet metal part (10) is disposed within the outer collar (11) and is firmly fixed thereto.

4. Rolling gear transmission according to claim 3, wherein the outer shell surface of the collar (11) is convex-bulged.

5. Rolling gear transmission according to claim 1, wherein the friction wheel (6) is provided with a coaxially-disposed inner collar.

6. Rolling gear transmission according to claim 5, wherein the two sheet metal parts (10, 11) are each provided with a circulating inner collar (12, 13) formed as one piece on their inner circumference.

7. Rolling gear transmission according to claim 6, wherein the free ends of the two inner collars (12, 13) face each other, wherein both collars (12, 13) together limit a bead opening (14) to receive a bolt.

8. Rolling gear transmission according to claim 6, wherein the free ends of the two inner collars (17, 18) face away from one another, wherein in each case a radial bearing (19, 20) is disposed between the two inner collars (17, 18) and the carrier (7).

9. Rolling gear transmission according to claim 8, wherein a track (21, 23) for bearings (22, 23) is formed on the outer surface of the inner collar (18).

10. Rolling gear transmission according to claim 9, wherein a ball groove (23) is formed in the outer shell surface.

11. Rolling gear transmission according to claim 1, wherein the sheet metal shell (9, 10) is provided with beads (16) distributed about its circumference in order to increase the rigidity of the friction wheel (6).

12. Rolling gear transmission according to claim 11, wherein at least one of the two sheet metal parts (9) is provided with a plurality of beads (16) distributed about its circumference and projecting towards the other sheet metal part (10).

13. Rolling gear transmission according to claim 11, wherein the beads (16) rest on the other sheet metal part (10).

## Revendications

1. Engrenage à roulement, notamment engrenage toroïdal à rapport variable en continu, comportant au moins une roue de friction (6) montée à rotation sur un support (7) basculant, entre un disque d'entraînement (2) et un disque entraîné (3), roue à friction (6) dont la surface de friction (8), prévue à la périphérie, coopère avec des surfaces frontales (4, 5) en regard des deux disques (2, 3), et qui comporte une zone centrale réalisée de préférence sous la forme d'un logement de palier ou de goujon,
**caractérisé en ce que**
la roue de friction (6) est formée de deux pièces de tôle (9, 10) reliées en dehors de la surface de friction (8) et dont le plan de séparation se trouve principalement transversalement à l'axe de rotation de la roue de friction (6), avec entre les deux parties en tôle (9, 10), dans la zone comprise entre la surface de friction et la zone centrale, au moins une cavité (15).

2. Engrenage à roulement selon la revendication 1,
**caractérisé en ce que**
les deux parties en tôle (9, 10) sont soudées l'une à l'autre et le cordon de soudure se trouve en dehors de la surface de friction (8).

3. Engrenage à roulement selon la revendication 1,
**caractérisé en ce qu'**
une partie de tôle (9) en forme de disque présente à sa périphérie extérieure, une collerette extérieure (11), périphérique, réalisée dans la pièce et dont la surface enveloppe extérieure comporte la surface de friction (8), l'autre pièce en tôle (10) en forme de disque se trouvant à l'intérieur de la collerette extérieure (11) en étant reliée solidairement à cette collerette extérieure (11).

4. Engrenage à roulement selon la revendication 3,
**caractérisé en ce que**
la surface enveloppe extérieure de la collerette (11) est bombée de manière convexe.

5. Engrenage à roulement selon la revendication 1,
**caractérisé en ce que**
la roue de friction (6) comporte une collerette intérieure coaxiale.

6. Engrenage à roulement selon la revendication 5,
**caractérisé en ce que**
les deux pièces en tôle (10, 11) ont à leur périphérie intérieure chaque fois une collerette (12, 13) intérieure, périphérique, réalisée dans la masse.

7. Engrenage à roulement selon la revendication 6,
**caractérisé en ce que**
les deux extrémités libres des deux collerettes intérieures (12, 13) sont tournées l'une vers l'autre et les deux collerettes (12, 13) délimitent en commun un orifice de moyeu (14) pour recevoir un goujon.

8. Engrenage à roulement selon la revendication 6,
**caractérisé en ce que**
les extrémités libres des deux collerettes intérieures (17, 18) sont tournées l'une à l'opposé de l'autre et entre les deux collerettes intérieures (17, 18) et le support (7) on a chaque fois un palier radial (19, 20).

9. Engrenage à roulement selon la revendication 8,
**caractérisé en ce que**
la surface enveloppe extérieure de la collerette intérieure (18) est munie d'un chemin de roulement (21, 23) pour les organes de roulement (22, 24).

10. Engrenage à roulement selon la revendication 9,
**caractérisé en ce qu'**
une rainure à bille (23) est formée dans la surface enveloppe extérieure.

11. Engrenage à roulement selon la revendication 1,
**caractérisé en ce que**
l'enveloppe en tôle (9, 10) comporte des moulures (16) réparties à sa périphérie pour rigidifier la roue à friction (6).

12. Engrenage à roulement selon la revendication 11,
**caractérisé en ce qu'**
au moins l'une des deux parties en tôle (9) comporte plusieurs moulures (16) réparties à la périphérie, et venant en saillie en direction de l'autre pièce en tôle (10).

13. Engrenage à roulement selon la revendication 11,
**caractérisé en ce que**
les moulures (16) sont appliquées contre l'autre pièce en tôle (10).
